# EUROPEAN PATENT SPECIFICATION

(11) **EP 4 021 199 B1**
(45) Date of publication and mention of the grant of the patent: **12.11.2025**
(21) Application number: 20765460.9
(22) Date of filing: 26.08.2020
(51) Int. Cl.: A23K 50/48

(54) **PROCESS FOR THE PRODUCTION OF A MEAT ANALOGUE**
VERFAHREN ZUR HERSTELLUNG EINES FLEISCHANALOGPRODUKTS
PROCEDE DE PREPARATION D'UN ANALOGUE DE VIANDE

(30) Priority: 27.08.2019 DE 102019122904
(43) Date of publication of application: 06.07.2022
(73) Proprietor: Mars, Incorporated, McLean, VA 22101-3383 (US)
(72) Inventor: SCHLEBUSCH, Johannes, Paul, 27283 Verden (DE)
(74) Representative: Haseltine Lake Kempner LLP
(86) International application number: PCT/US2020/047874
(87) International publication number: WO 2021/041461

(56) References cited:
- US-A- 3 469 301
- US-A- 3 649 301
- US-A1- 2007 148 323
- US-A1- 2007 243 298
- US-A1- 2008 248 167
- US-A1- 2016 219 904

## Description

### 1. FIELD OF THE INVENTION

The presently disclosed subject matter relates to processes for the production of food components, and more particularly meat analogues, for use in pet or human foods.

### 2. BACKGROUND

Pet foods have long been manufactured from animal by-products and non-animal derived ingredients to prepare high quality food that provides the pet with the required nutrient profile without competing with the human food demand for meat. As the global population increases, the global demand for high protein foods including meat is expected to increase. Thus, there is a growing need for pet foods prepared from meat analogues, which meet the nutritional needs of pets and which are also sufficiently palatable.

Meat analogues are typically prepared by mixing, chopping and emulsifying a mixture of raw meat ingredients such as beef, pork, lamb, chicken or combinations thereof obtained from the muscle tissue and meat by-products. These raw meat ingredients are then mixed with various dry ingredients, for example vegetable by-products, starches, vitamins, minerals, gums, and glutens, to make a meat emulsion. The resulting meat emulsion is then extruded into a continuous slab or sheet that is further transferred into a steam tunnel where the slab or sheet is cooked by exposing it to heat. The cooked slab or sheet is then chopped into pieces forming meat analogues. A sauce preparation or the like can be optionally added, and the meat analogues can then be packed and processed for sterilization. The meat analogues prepared by such a process are also called steam formed meat (SMF) chunks.

During the preparation of steam formed meat (SFM) chunks, nutritional materials are not fully utilized because, for example, dust is produced, etc. These materials from steam formed meat (SFM) chunks can typically only be re-used in the chunk making process at a very low level. The reason is that the protein heated to 90-100°C is denatured and softens the texture of newly steam formed meat chunks. Thus, the sustainability of the process of steam forming meat chunks is low, production left-overs from steam formed meat chunks can rarely be re-used.

Thus, there remains a need for improved processes for the production of meat analogues having increased sustainability in that production left-overs can be re-introduced into the process without degrading the quality thereof, particularly with respect to the palatability of the meat analogues prepared.

US20080248167A1 discloses processed meat compositions comprising structured protein products having substantially aligned protein fibres and reprocessed meat products.

US20070243298A1 discloses a process of sterilizing food composition designed to be used in an aseptic process.

US3649301 discloses a method for manufacturing sausage in which the broth produced in the high-temperature wet-rendering of animal fat is combined with raw meat materails to form a sausage emulsion..

US20070148323A1 discloses meat emulsion products and methods for producing meat emulsion products.

US20160219904A1 discloses meat emulsion products that have a high meat content and also realistic fibre definition.

### 3. SUMMARY OF THE INVENTION

The present disclosure provides novel processes for the production of meat analogues. Such processes can advantageously provide meat analogues with improved palatability as compared to existing meat analogues. Processes of the present disclosure further exhibit increased sustainability since production left-overs can be re-introduced into the process without degrading the quality of the meat analogues prepared therefrom, for example, with respect to palatability.

The present disclosure provides processes for the production of a meat analogue comprising: a) introducing a meat batter comprising protein into a heating unit and heating the meat batter to a temperature above the melting temperature of the protein to produce a heat-treated product; b) transferring the heat-treated product to a cooling unit and cooling the heat-treated product to a temperature below water boiling temperature at ambient pressure when exiting the cooling unit; and c) dividing the cooled heat-treated product into pieces, in which about 1 wt.-% to about 30 wt.-% of the pieces are reintroduced into the process.

In certain embodiments, about 5 wt.-% to about 25 wt.-% of the pieces can be reintroduced into the process.

In certain embodiments, the meat batter can be heated to a temperature of at least about 130°C. In particular embodiments, the meat batter can be heated to a temperature of from about 140°C to about 170°C. In certain embodiments, the heating unit comprises: a first heating unit in which the meat batter can be heated to a temperature above the denaturation temperature of the protein in the meat batter, but below the melting temperature of the protein to produce a first heat-treated product; a second heating unit in which the first heat-treated product can be heated to a temperature above the melting temperature of the protein to produce a second heat-treated product; and a transferring means disposed between the first and the second heating units. In certain embodiments, the heating unit can be a single heating unit operated with different temperature zones of applied heating medium, steam, or combinations thereof along its length. In particular embodiments, the single heating unit can be operated with increasing temperatures from an entrance to an exit of the single heating unit. For example, in certain embodiments, the single heating unit can be operated with an incremental temperature increase.

In certain embodiments, at least one of the first heating unit, the second heating unit or the single heating unit can comprise a scraped surface heat exchanger. In particular embodiments, the first and the second heating units can comprise a scraped surface heat exchanger.

In certain embodiments, a temperature difference of the meat batter to a surface of the single heating unit, at all distances from the entrance of the single heating unit, can be between about 7°C and about 50°C. In particular embodiments, the temperature difference of the meat batter to a surface of the single heating unit, at all distances from the entrance of the single heating unit, can be between about 10°C and about 30°C.

In certain embodiments, the single heating unit can have a temperature zone of about 50°C at the entrance of the single heating unit and a temperature zone of about 170°C at the exit of the single heating unit. In particular embodiments, the single heating unit can comprise at least three temperature zones. For example, in certain embodiments, the single heating unit can comprise at least five temperature zones of about 50°C, about 80°C, about 110°C, about 140°C and about 170°C, respectively, from the entrance to the exit of the single heating unit.

In certain embodiments, the pressure in the heating unit can be higher than the water vapor pressure at the melting temperature of the protein in the meat batter. In particular embodiments, the pressure in the heating unit can be from about 800 kPa to about 2,000 kPa.

In certain embodiments, the pieces can be reintroduced into the process by a displacement pump.

Also disclosed herein, but not claimed as part of the present invention, are meat analogues produced by processes according to the present disclosure.

### 4. BRIEF DESCRIPTION OF THE DRAWINGS

**FIG. 1** illustrates a graph of the amount of meat analogue compositions prepared according to the present disclosure eaten by a cat panel dependent on the amount of re-work added in accordance with Examples 1 and 2.
**FIG. 2A** illustrates a graph of the hardness values of the meat analogue compositions prepared dependent on the amount of re-work added in accordance with FIG. 2B and Examples 1 and 3.
**FIG. 2B** illustrates a chart of the hardness values of the meat analogue compositions prepared dependent on the amount of re-work added in accordance with Examples 1 and 3.

### 5. DETAILED DESCRIPTION

The present disclosure provides improved processes for the production of meat analogues. Meat analogues provided in accordance with the methods of the present disclosure exhibit improved palatability as compared to existing meat analogues. Such processes can have increased sustainability in that production left-overs can be re-introduced into the process without degrading the quality thereof, particularly with respect to the palatability of the meat analogues prepared.

For clarity and not by way of limitation, this detailed description is divided into the following sub-portions:
5.1. Definitions;
5.2. Methods of making meat analogues; and
5.3. Methods of using meat analogues.

### 5.1. Definitions

The terms used in this specification generally have their ordinary meanings in the art, within the context of this disclosure and in the specific context where each term is used. Certain terms are discussed below, or elsewhere in the specification, to provide additional guidance in describing the compositions and methods of the disclosure and how to make and use them.

As used in the specification and the appended claims, the singular forms "a," "an" and "the" include plural referents unless the context clearly dictates otherwise. Thus, for example, reference to "a compound" includes mixtures of compounds.

As used herein, the terms "about" or "approximately" means within an acceptable error range for the particular value as determined by one of ordinary skill in the art, which will depend in part on how the value is measured or determined, *i.e.,* the limitations of the measurement system. For example, "about" can mean within three or more than three standard deviations, per the practice in the art. Alternatively, "about" can mean a range of up to 20%, preferably up to 10%, more preferably up to 5%, and more preferably still up to 1% of a given value. Also, particularly with respect to systems or processes, the term can mean within an order of magnitude, preferably within five-fold, and more preferably within two-fold, of a value.

As used herein, the term "at least partly" can refer to the number of pieces, e.g., a part or portion of which can be re-introduced into the process (e.g., at step a)).

As used herein, the terms "animal" or "pet" as used in accordance with the present disclosure refers to domestic animals including, but not limited to, domestic dogs, domestic cats, horses, cows, ferrets, rabbits, pigs, rats, mice, gerbils, hamsters, goats, and the like. Domestic dogs and cats are particular non-limiting examples of pets. The term "animal" or "pet" as used in accordance with the present disclosure can further refer to wild animals, including, but not limited to bison, elk, deer, venison, duck, fowl, fish, and the like.

As used herein, the terms "animal feed," "animal feed compositions," "pet food," "pet food article," or "pet food composition" are used interchangeably herein and refer to a composition intended for ingestion by an animal or pet. Pet foods can include, without limitation, nutritionally balanced compositions suitable for daily feed, such as kibbles, as well as supplements and/or treats, which can be nutritionally balanced. In an alternative embodiment, the supplement and/or treats are not nutritionally balanced. In that regard, the terms "animal feed," "animal feed compositions," "pet food," "pet food article," or "pet food composition" encompass both pet treats and pet primary foods, as defined herein.

As used herein, the terms "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus.

As used herein, the terms "denatured" or "denaturation" related to proteins means that denatured proteins have lost their three-dimensional structure. Denatured proteins can exhibit a wide range of characteristics, from loss of solubility to protein aggregation. Someone skilled in the art is well aware what is to be understood under a denatured protein.

As used herein, the terms "dividing" or "divided" refer to any operation to comminute a product (e.g., a heat-treated product), for example, cutting, ripping, tearing, squeezing, hammer milling, etc.

As used herein, references to "embodiment," "an embodiment," "one embodiment," "in various embodiments," etc., indicate that the embodiment(s) described can include a particular feature, structure, or characteristic, but every embodiment might not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "palatability" or "palatable" refer to being desirable to the palate or taste. Further, the terms "palatability" or "palatable" as used herein refer to the extent to which a pet food product appeals to the palate or taste of an animal. This is suitable measured by feeding tests, e.g., difference tests or ranking tests. In certain embodiments, "palatability" can mean a relative preference for one food product over another. For example, when an animal shows a preference for one of two or more food products, the preferred food product is more "palatable", and has "enhanced palatability" or "increased palatability". In certain embodiments, the relative palatability of one food product compared to one or more other food products can be determined, for example, in side-by-side, free-choice comparisons, e.g., by relative consumption of the food products, or other appropriate measures of preference indicative of palatability.

As used herein, the term "meat analogue" refers to a meat substitute suitable for use in pet or animal food as a meat replacement, which can suitably be a "chunk". The meat analogue can have sensory attributes similar to cooked meat. Meat analogues can be incorporated into pet or human food products. They can be particularly suitable for inclusion in wet pet food products of all types, e.g., they can be incorporated into pates, loaves and chunk in sauce formats. They can be particularly suitable for inclusion in "chunk in sauce" products, e.g., "chunk and gravy", "chunk and jelly" or "chunk and mousse" products. The meat analogues can be typically between about 8 mm and about 30 mm in length along the longest dimension. The meat analogues can have a nutritional composition of moisture, protein, fat, and ash. For example, the meat analogues can suitably have a nutrient composition of about 45% to about 65% moisture, or about 50% to about 56% moisture, about 25% to about 36% protein, about 4% to about 13% fat, and about 1% to about 3% ash.

As used herein, the term "meat batter" refers to a thick mixture of water and other substances derived from raw materials, such as meat or meat by-products. They are not emulsions such as mayonnaise or milk, but are dispersions of fat particles and air bubbles in a complex phase composed of water, solubilized meat protein, cellular components and other ingredients. They can also be referred to as a "meat emulsion" or a "meat slurry". These terms are well understood in the art and are used interchangeably. Typically they comprise a continuous phase which is an aqueous medium containing soluble proteins, soluble muscle constituents, segments of muscle fibers, connective tissue fibers, bones, etc. and optionally materials of plant origin materials such as proteins and/or starches and/or fibres and/or minerals. Meat batters/emulsions/slurries can also contain further additives as is common in the art. Meat batters can be obtained by known methods, e.g., by fragmenting frozen meat obtained from animal skeletal muscle to generate meat fragments which can be blended with water, one or more binding agent(s), and optionally other ingredients. Frozen meat can be suitably chopped, crushed and ground to create a meat batter/slurry/emulsion. Typically, the ground meat slurry will be size-reduced by use of a system comprising rotating and static elements, for example, by means of rotating knives on die plates, and finally passes through a hole of characteristic diameter. In various embodiments, the maximum diameter of the hole can be about 0.5 mm, about 1 mm, about 2 mm, about 3 mm, about 4 mm, about 5 mm, about 6 mm, about 7 mm, about 8 mm, about 9 mm, and/or about 10 mm. The resulting finer ground meat emulsion can suitably be transferred to a mixer where water, dry ingredients (e.g., protein powder of vegetable origin) and liquid ingredients (e.g., colourants) can be optionally added to provide a meat batter.

As used herein, the terms "nutritionally complete" or "nutritionally balanced" in reference to a composition means that the composition has known required nutrients to sustain life in proper amounts and proportion based on recommendations of recognized authorities, including governmental agencies. For example, and not by way of limitation, in the context of pet food, such agency can be the United States Food and Drug Administration's Center for Veterinarian Medicine, or the American Feed Control Officials Incorporated, in the field of pet nutrition, except for the additional need for water. For example, and not by way of limitation, in the context of human food, such agency can be the United States Food and Drug Administration (FDA).

As used herein, the term "protein" refers to one or more proteins suitably provided by one or more of the raw materials. The protein can suitably be animal proteins, vegetable proteins or any combination thereof. Animal proteins can include any protein of animal origin (including vertebrate and invertebrate proteins), e.g., proteins derived from mammals, fowl, fish and insects. Examples of suitable animal proteins include those derived from chicken, turkey, beef, lamb, pork, venison, buffalo, duck, kangaroo, shell fish, crustaceans, salmon, tuna, whitefish, etc. They can suitably be derived from muscle meat, organs, tendons, bone, etc. Further suitable animal proteins can include milk or egg derived proteins. Suitable vegetable proteins can include proteins derived from wheat gluten, soy protein isolate, maize, pea, rice, peanuts, hemp, cotton seed, lupine, potato, etc. or blends thereof. The proteins can be in any suitable form, e.g., isolated or partially isolated, concentrated, ground, etc.

As used herein, the term "melting point" of a protein is the temperature at which it changes state from solid to liquid at the pressure selected. The denaturation temperature of a protein can be measured by methods well known in the art, for example by use of a rubber process analyzer. As a rubber process analyzer, a respective analyzer from TA Instruments, Wetzlar, Germany, Model RPA Elite, can be used, measuring viscoelastic properties of protein/moisture samples pursuing a temperature sweep analysis delivering a protein melting range.

As used herein, the term "reutilized nutritional materials", "RNM" or "re-work" refers to nutritional materials, e.g., meat analogue, reused or reintroduced into the process for producing the same.

As used herein, the term "scraped surface heat exchanger" or "SSHE" refers to a mechanical device having a heated surface and a device for dislodging material from the heated surface by scraping.

As used herein, the term "weight percent" is meant to refer to the quantity by weight of a constituent or component, for example, in the pet food composition as a percentage of the overall weight of the pet food composition. The term "weight percent" can also refer to the quantity by weight of a constituent or component, for example, in the meat analogue as a percentage of the overall weight of the meat analogue. The terms "weight percent," "wt-%," "wt.%", and "wt%" are used interchangeably.

### 5.2. Methods of Making Meat Analogues

The present disclosure provides for processes for the production of meat analogues. The process includes the introduction of a meat batter including protein into a heating unit. The meat batter is heated to a temperature above the melting temperature of the protein to produce a heat-treated product. The heat-treated product is transferred to a cooling unit. The heat-treated product is cooled to a temperature below water boiling temperature at ambient pressure when exiting the cooling unit. The cooled heat-treated product is divided into pieces. Such pieces are partly re-introduced into the process, i.e., wherein about 1 wt.-% to about 30 wt.-% of the pieces are reintroduced into the process.

The part or portion of the pieces to be re-introduced into the process can be re-introduced at several occasions. For example, the reutilized nutritional materials (RNM) (i.e., in an amount less than about 100 wt.-%), can be, e.g., used in preparing the meat batter.

The heating unit can suitably be any heating system known in the art, e.g., it can suitably comprise a high shear emulsifier, a heat exchanger or a dielectric heater. In certain embodiments, the heating unit can comprise a heat exchanger, for example, a scraped surface heat exchanger (SSHE). For example, a suitable scraped surface heat exchanger can include a tubular device with a heated jacket surrounding its outer wall, through which heat is transmitted. Such a tubular device can include a center rotor with scrapers affixed to it. When such a center rotor rotates, the scrapers can remove product from the inner wall of the tubular device. In use, a mixture of ingredients can be fed into one end of the tubular device and pushed through the device. The heating and the motion through the annular space between the heated inner wall of the cylinder and the center rotor results in a transformation of the mixture. Scraped surface heat exchangers can have the advantage of moving the ingredient mixture constantly through a pipe or similar hollow cylinder that is arranged such that heat is applied to its external surface. This can be accomplished by encasing the pipe or cylinder in a water bath that can be maintained at a desired temperature, e.g., by encasing the pipe or cylinder in a thermal agent medium, steam chamber, thermo-oil or other suitable heated medium that can be maintained at the desired temperature. In certain embodiments, an external electrical heated outer temperature source can be used. The temperature difference between the interior and exterior of the scraped surface heat exchanger can cause the ingredient mixture to be heated through indirect heating. Scraped surface heat exchangers are well known in the art. In certain embodiments, both the first and the second heating units can include a heat exchanger. In particular embodiments, both the first and second heating units can include a scraped surface heat exchanger.

In certain embodiments, the heating unit can comprise a first heating unit in which the meat batter is heated to a temperature above the denaturation temperature of the protein in the meat batter, but below the melting point of the protein to produce a first heat-treated product; a second-heating unit in which first heat-treated product is heated to a temperature above the melting temperature of the protein to produce a second heat-treated product; and a transferring means between the first and the second heating units.

In certain embodiments, the heating unit can be a single heating unit with different temperature zones of applied heating medium and/or steam along its length, for example, with increasing temperature from entrance to exit of the single heating unit and/or the single heating unit is operated with an incremental temperature increase.

In certain embodiments, the heating unit can include a microwave heating unit, a radio frequency heating unit or an Ohmic heating unit, the use thereof can reduce the residence time of the product in the heating unit.

In certain embodiments, the process of the present disclosure can include the use of additional heating units, for example, a heating unit before step a) for heating the meat batter to a temperature below the denaturation temperature of the protein, and/or a further heating unit between first and second heating unit for further heating the first heat-treated product below the melting temperature of the protein.

In certain embodiments, two or more heating units can be operated in parallel in one process step.

In the alternative that a first and a second heating unit are utilized, when the meat batter enters the first heating unit, it can suitably have a temperature of between about 10°C and about 45°C or between about 15°C and about 35°C. The slurry can suitably be pumped into the unit at about 800 kPa to about 2,000 kPa or about 1,000 kPa to about 1,250 kPa and heated as it passes through the unit, e.g., by supplying a heat jacket with steam.

In certain embodiments, the meat batter can be heated in the first heating unit to a temperature of about 90°C to about 125°C, about 100°C to about 125°C, about 90°C to about 115°C, about 100°C to about 115°C, about 90°C to about 110°C or about 100°C to about 110°C. In certain embodiments, the first heat-treated product can be heated in the second heating unit to a temperature of about 140°C to about 170°C, about 145°C to about 170°C, about 150°C to about 170°C, about 155°C to about 170°C, about 160°C to about 170°C, about 140°C to about 165°C, about 145°C to about 165°C, about 150°C to about 165°C, about 155°C to about 165°C or about 160°C to about 165°C.

The ratio of residence time of the meat batter in the first heating unit to the residence time of the meat batter in the second heating unit can be from about 1:1 to about 14:2, from about 9:8 or about 8:5 to about 6:2 or from about 4:2 to about 7:3.

In certain embodiments, the pressure in the first heating unit and the pressure in the second heating unit can exceed the water vapor pressure at the respective local temperature. In particular embodiments, the pressure in the first heating unit and the pressure in the second heating unit can be substantially equal and can be in a range between about 800 kPa to about 2,000 kPa, about 800 kPa to about 1,800 kPa, about 1,000 kPa to about 1,800 kPa, about 1,000 kPa to about 1,500 kPa or about 1,000 kPa to about 1,250 kPa. This pressure range can allow for efficiency of energy transfer and reduction of wear of the equipment, for example, the scrapers in a scraped surface heat exchanger.

The second heat-treated product can be divided into pieces at a temperature of about 40°C to about 105°C, about 40°C to about 95°C, about 40°C to about 80°C, about 40°C to about 70°C, about 50°C to about 80°C or about 50°C to about 70°C.

In certain embodiments, the process can utilize a single heating unit, in which the single heating unit can comprise a single scraped surface heat exchanger. Such embodiment includes only one heating unit, which is used and operated in the process. The single heating unit can include, and in certain embodiments consists of, a single scraped surface heat exchanger.

In certain embodiments, the single heating unit can be operated in step c) with different temperature zones of applied heating medium and/or steam along its length, for example, with increasing temperatures from entrance to exit of the single heating unit. This could be realized by using several zones that can be individually heated. For example, the single heating unit can be surrounded by several coats having an individual steam supply at different temperatures. In certain embodiments, e.g., at least three (3) or four (4) zones can be provided. In certain embodiments, five (5) zones with temperatures of the applied heating medium and/or steam ranging from about 50°C, about 80°C, about 110°C, about 140°C, and about 170°C, respectively, allowing to limit the temperature difference of the meat batter to a surface of the single heating unit to be between about 7°C and about 50°C or between about 10°C and about 30°C. Such embodiment was determined to avoid overheating of the meat batter and improve palatability of the finally produced meat analogue.

When the meat batter enters the single heating unit, it can have a temperature of about 10°C to about 45°C or about 15°C to about 35°C. The meat batter can be pumped into the unit at about 800 kPa to about 2,000 kPa or about 1,000 kPa to about 1,250 kPa and heated as it passes through the unit, e.g., by supplying a heat jacket with a liquid heating medium and/or steam. In certain embodiments, the pressure in the single heating unit can be in a range between about 800 kPa to about 2,000 kPa, about 800 kPa to about 1,800 kPa, about 1,000 kPa to about 1,800 kPa, about 1,000 kPa to about 1,500 kPa, or about 1,000 kPa to about 1,250 kPa. This pressure range can allow for efficiency of energy transfer (ensuring that water within the meat batter will maintain liquid status) and reduction of wear of the equipment, for example, the scrapers in the scraped surface heat exchanger. The heat-treated product can be divided into pieces at a temperature of about 40°C to about 105°C, about 40°C to about 95°C, about 40°C to about 80°C, about 40°C to about 70°C, about 50°C to about 80°C, or about 50°C to about 70°C.

The meat batter utilized in the processes according to the present disclosure can include a mixture of proteins having differing denaturation temperatures and melting temperatures. In certain embodiments, substantially all the protein in the meat batter can be denatured in the heating unit. In certain embodiments, in the heating unit, at least about 50 wt.-%, at least about 60 wt.-%, at least about 70 wt.-%, at least about 80 wt.-% or at least about 90 wt.-% of protein, based on the total amount of protein in the meat batter can be melted. In particular embodiments, substantially all the protein is melted. In certain embodiments, it is only necessary that enough protein is melted to form a cohesive and continuous outer phase of the heat-treated product that can carry non-melted other proteins, fibers, bone particles, etc.

The denaturation temperature of a protein can be measured by methods well known in the art, for example by use of a rubber process analyzer. As a rubber process analyzer, a respective analyzer from TA Instruments, Wetzlar, Germany, Model RPA Elite, can be used, measuring viscoelastic properties of protein/moisture samples pursuing a temperature sweep analysis delivering a protein melting range. With respect to the melting range for the proteins used, rheological measurements can be utilized, wherein the melting range is the temperature range, where after an increase in viscosity due to the denaturing (unfolding) of the proteins a drop of viscosity is observed indicating a change from a suspension of solids into a homogeneous liquid phase. The melting point of a protein can be measured by methods well known in the art, for example by differential scanning calorimetry (DSC). For individual proteins, respective data of denaturation temperature and melting point can be also obtained from scientific literature.

The heat treated product can be a layered and/or aligned product formed as the material cools in step (b). As the melted material solidifies, a layered fibrous meat analogue structure can be formed. Step (b) can be optionally performed under pressure of about 800 kPa to about 2,000 kPa such that the protein solidifies step by step in layers which create a fibrous structure. Thus, in the cooling step, the aggregate of the protein can change from a liquid melt to a (softer matter based) solid phase. This can represent a non-liquid gel or rubber-like texture that can be cut into smaller pieces.

In certain aspects, the protein setting can be the controlled solidification of melted protein. The formation of meat-like fibers can be the direct result of an appropriately controlled cooling. As described above, if the heat-treated product has been heated above the melting point of the protein, at least part of that protein (or the protein mixture) is said to be melted. Once proteins have been brought to the melted state, upon cooling, they will solidify into a strong, elastic mass with leather-like properties. This mass does not easily re-melt and cannot be pumped mechanically. Thus, it is important that, once melted, protein is maintained in motion and cooled in a cooling unit from which solidified material can be continuously discharged.

The heat-treated product can exit the heating unit at a temperature of, e.g., about 140°C to about 170°C and can be cooled to a temperature below water boiling temperature in a cooling unit, e.g., using a tubular cooling zone cooled with water. In certain embodiments, a rectangular shaped cooling die design can be used. The product can be transferred through the unit, e.g., along a cool surface, and form into a layered fibrous structure as the melt solidifies (as the product temperature drops below its melting point). This can occur under pressure and in motion and the protein solidifies step by step in layers to create fibrous structures.

In certain embodiments, the cooled heat-treated product can be divided. This can be performed, for example, using a grid or rotary cutting device. Dividing can be performed in one or more steps, for example, a first cutting can be performed using a grid cutter followed by a second cutting using a rotary cutter. The resulting meat analogues can be irregular, random or essentially random in shape. Optionally, they can be transferred to an inspection station for visual inspection to facilitate quality control, manual or automatic, e.g., using a digital camera and suitable image recognition software.

### 5.3. Methods of Using Meat Analogues

The meat analogues produced by processes and apparatuses of the present disclosure, which are described but not part of the claimed invention, can be used alone or incorporated into pet or human food products. Such end food products can include, for example, and not by way of limitation, a mixed pet food product. Meat analogues of the present disclosure, which are described but not part of the claimed invention, can be incorporated into pates, loaves and chunk in sauce formats. For example, meat analogues of the present disclosure can be incorporated in "chunk in sauce" products, e.g., "chunk and gravy", "chunk and jelly" or "chunk and mousse" products.

### 6. EXAMPLES

The presently disclosed subject matter will be better understood by reference to the following Examples, which are provided as exemplary of the disclosure, and not by way of limitation.

### Example 1: Meat Analogue Compositions

The present Example provides processes for the production of meat analogues in accordance with certain embodiments of the present disclosure.

Three parts of a slurry containing 90.8% meat and animal derivatives, 4.7% water, and 4.5% of at least one of vitamins, minerals, palatants, colorants, etc. (all percentages are weight percentages based on the total weight of the slurry) as to achieve a nutritionally complete cat food finished product were mixed with one part vegetable protein powder containing min. 75% protein (vital wheat gluten) to form a semi-solid mixture containing 30.5% crude protein, 59% moisture and 4.5% fat (all percentages of the semi-solid mixture are based on the total weight of the semi-solid mixture).

The mixture was fed into a first scraped surface heat exchanger (SSHE) heating unit with a volume of approximately 17L and a surface to volume ratio of 60 m²/m³ under 1,200 kPa product pressure. The first SSHE heating unit was continuously supplied with steam at a temperature between 134-136°C and the shaft was operated at 200 rpm. The outlet temperature of the material from the first SSHE heating unit was between 109°C and 111°C. The material was immediately directed into a second SSHE heating unit with a volume of approximately 9.7L and a surface to volume ratio of 60 m²/m³ under 1,200 kPa product pressure. The second SSHE heating unit was continuously supplied with steam at a temperature between 166-168°C and the shaft was operated at 300 rpm. The outlet temperature of the material from the second SSHE heating unit was between 158-160°C. The residence time in the two heating units was distributed as two-thirds in the first SSHE heating unit and one third in the second SSHE heating unit. The material was then directed to a cooling area through which its temperature was brought down to below 80°C. The solid material obtained was cut to produce meat analogues with internal fibrosity.

Based on this recipe, compositions including 0% (Composition 1), 3% (Composition 2), 5% (Composition 3), 10% (Composition 4), 25% (Composition 5) and 100% (Composition 6), by weight reutilized nutritional materials (RNM) content were produced for a set of difference trials with rotational groups. The compositions were produced by directing the respective amount of meat analogue produced back into the step of introducing the meat batter into the first SSHE heating unit.

The compositions prepared and tested including the amount of re-work added and the amount of wheat gluten in weight percent (wt.-%) are provided in Table 1.

**Table 1.**

| **Composition** | **Wt.-% RNM Addition** | **New Chunk (Wt.-% Wheat Gluten)** |
|---|---|---|
| 1 | 0% RNM addition | New chunk contains 25.0% wheat gluten |
| 2 | 3% RNM addition | New chunk contains 25.75% wheat gluten |
| 3 | 5% RNM addition | New chunk contains 26.25% wheat gluten |
| 4 | 10% RNM addition | New chunk contains 27.5% wheat gluten |
| 5 | 25% RNM addition | New chunk contains 31.25% wheat gluten |
| 6 | 100% RNM addition | New chunk contains 25.00% wheat gluten* |

| | | |
|---|---|---|
| ** no additional wheat gluten addition* | | |

### Example 2: Feeding Trial

The present Example provides feeding trial testing of meat analogues (Compositions 1-6) prepared in accordance with Example 1. Composition 1 with 0% by weight reutilized nutritional materials (RNM) was used as a control.

The feeding trial was substantially based on the methodology disclosed in WO 2015/066009 A1 (Mathieu, et al.). A set of six (6) "two-bowl" feeding tests with rotational groups was used. In each of the "two-bowl" tests, two compositions were presented simultaneously to each of thirty (30) cats. The individual feeding station was accessible via an individual cat collar chip. Identical amounts of each composition were served in each of the two bowls.

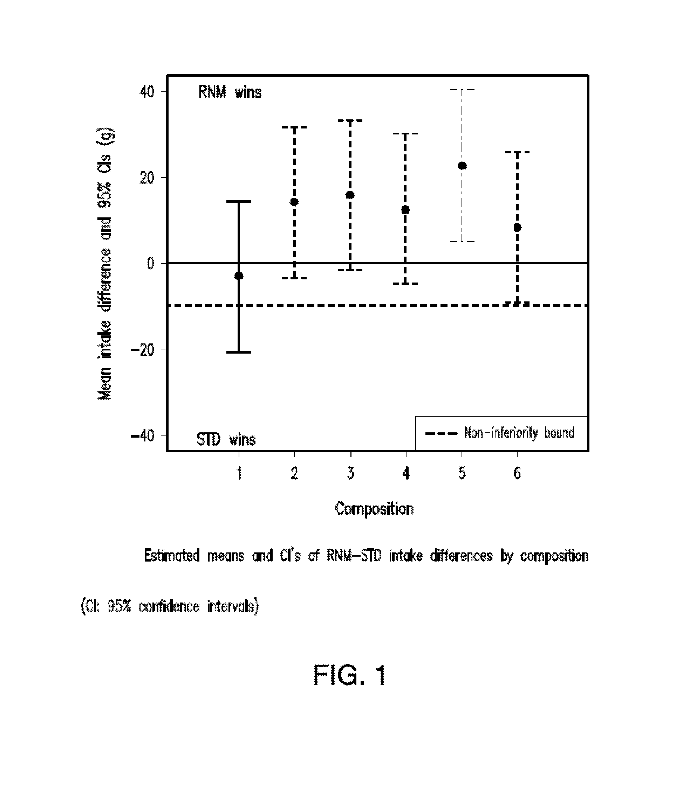

In each of seven (7) feeding trials, the cats were exposed twice to the two compositions. The position of the two bowls was switched in the second exposure to avoid any bias. The quantity eaten was measured after a maximum of sixteen (16) hours of exposure. Statistical analysis (Analysis of variance) were made on the data to conclude on the significance of the effect. The intake-differences vs the standard product were calculated. The non-inferiority bound of 9.84 g was defined for the cat panel used. The feeding test results are illustrated in FIG. 1. As shown in FIG. 1, the cats preferred statistically the pet food containing re-work (Compositions 2-6). The product containing 25 wt.-% of re-work (Composition 5) was most preferred.

### Example 3: Hardness Testing

The present Example provides physical property testing (i.e., hardness) of meat analogues (Compositions 1-6) prepared in accordance with certain embodiments of the present disclosure. Composition 1 with 0% by weight reutilized nutritional materials (RNM) was used as a control.

Hardness of Compositions 1-6 was measured using the Kramer methodology, in which a maximum force is measured when 5 blades (3 mm thick and 70 mm wide) are penetrating 200 g of the meat analogue. The maximum force equals the hardness. The measurement was performed on a TA HD two-armed texture analyzer using a 250 kg load cell.

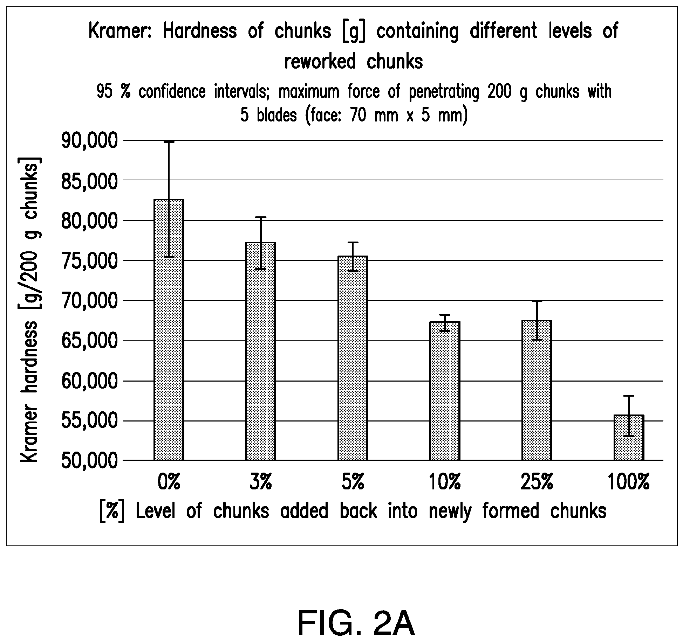

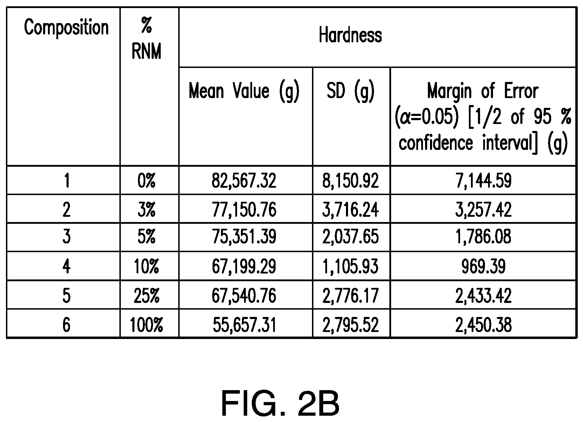

The results are provided in FIGS. 2A-B. FIG. 2A illustrates a graph from the table provided in FIG. 2B. In FIG. 2A, the % level of chunks added back into newly formed chunks is provided on the x-axis with 0% (Composition 1), 3% (Composition 2), 5% (Composition 3), 10% (Composition 4), 25% (Composition 5), and 100% (Composition 6). As shown in FIGS. 2A-B, the hardness of the chunks decreased with increasing level of re-work added. The meat analogues prepared in accordance with the processes of the present disclosure (Compositions 2-6) provided a hardness different from the hardness of the control formulation without the addition of re-work (Composition 1).

## Claims

1. A process for the production of a meat analogue, comprising:
a) introducing a meat batter comprising protein into a heating unit and heating the meat batter to a temperature above the melting temperature of the protein to produce a heat-treated product,
b) transferring the heat-treated product to a cooling unit and cooling the heat-treated product to a temperature below water boiling temperature at ambient pressure when exiting the cooling unit, and
c) dividing the cooled heat-treated product into pieces,
wherein about 1 wt.-% to about 30 wt.-% of the pieces are reintroduced into the process.

2. A process according to claim 1, wherein about 5 wt.-% to about 25 wt.-% of the pieces are reintroduced into the process.

3. A process according to any one of the preceding claims, wherein the meat batter is heated to a temperature of at least about 130°C, preferably wherein the meat batter is heated to a temperature of from about 140°C to about 170°C.

4. A process according to any one of the preceding claims, wherein the heating unit comprises:
a first heating unit in which the meat batter is heated to a temperature above the denaturation temperature of the protein in the meat batter, but below the melting temperature of the protein to produce a first heat-treated product,
a second heating unit in which the first heat-treated product is heated to a temperature above the melting temperature of the protein to produce a second heat-treated product, and a transferring means disposed between the first and the second heating units.

5. A process according to any one of claims 1 to 3, wherein the heating unit is a single heating unit operated with different temperature zones of applied heating medium, steam, or combinations thereof along its length.

6. A process according to claim 5, wherein the single heating unit is operated with increasing temperatures from an entrance to an exit of the single heating unit.

7. A process according to claim 5, wherein the single heating unit is operated with an incremental temperature increase.

8. A process according to any one of claims 4 to 7, wherein at least one of the first heating unit, the second heating unit or the single heating unit comprises a heat exchanger, preferably a scraped surface heat exchanger.

9. A process according to claim 5, wherein a temperature difference of the meat batter to a surface of the single heating unit, at all distances from the entrance of the single heating unit, is between about 7°C and about 50°C, preferably between about 10°C and about 30°C.

10. A process according to any one of claims 5 to 9,
wherein the single heating unit has a temperature zone of about 50°C at the entrance of the single heating unit and a temperature zone of about 170°C at the exit of the single heating unit.

11. A process according to claim 10, wherein the single heating unit comprises at least three temperature zones.

12. A process according to claim 10, wherein the single heating unit comprises at least five temperature zones of about 50°C, about 80°C, about 110°C, about 140°C and about 170°C, respectively, from the entrance to the exit of the single heating unit.

13. A process according to any one of the preceding claims, wherein the pressure in the heating unit is higher than the water vapor pressure at the melting temperature of the protein in the meat batter, preferably wherein the pressure in the heating unit is from about 800 kPa to about 2,000 kPa.

14. A process according to any one of the preceding claims, wherein the pieces are reintroduced into the process by a displacement pump.

## Patentansprüche

1. Verfahren zur Herstellung eines Fleischanalogs, umfassend:
a) Einführen eines Fleischteigs, der Protein umfasst, in eine Heizeinheit und Erhitzen des Fleischteigs auf eine Temperatur oberhalb der Schmelztemperatur des Proteins, um ein wärmebehandeltes Produkt herzustellen,
b) Überführen des wärmebehandelten Produkts in eine Kühleinheit und Kühlen des wärmebehandelten Produkts auf eine Temperatur unter der Siedetemperatur von Wasser bei Umgebungsdruck bei Austreten aus der Kühleinheit, und
c) Teilen des abgekühlten wärmebehandelten Produkts in Stücke,
wobei etwa 1 Gew.-% bis etwa 30 Gew.-% der Stücke in das Verfahren zurückgeführt werden.

2. Verfahren nach Anspruch 1, wobei etwa 5 Gew.-% bis etwa 25 Gew.-% der Stücke in das Verfahren zurückgeführt werden.

3. Verfahren nach einem der vorstehenden Ansprüche, wobei der Fleischteig auf eine Temperatur von wenigstens etwa 130 °C erhitzt wird, wobei der Fleischteig vorzugsweise auf eine Temperatur von etwa 140 °C bis etwa 170 °C erhitzt wird.

4. Verfahren nach einem der vorstehenden Ansprüche, wobei die Heizeinheit umfasst:
eine erste Heizeinheit, in der der Fleischteig auf eine Temperatur oberhalb der Denaturierungstemperatur des Proteins in dem Fleischteig aber unterhalb der Schmelztemperatur des Proteins erhitzt wird, um ein erstes wärmebehandeltes Produkt zu erzeugen,
eine zweite Heizeinheit, in der das erste wärmebehandelte Produkt auf eine Temperatur oberhalb der Schmelztemperatur des Proteins erhitzt wird, um ein zweites wärmebehandeltes Produkt zu erzeugen, und eine Überführungseinrichtung, die zwischen der ersten und der zweiten Heizeinheit angeordnet ist.

5. Verfahren nach einem der Ansprüche 1 bis 3, wobei die Heizeinheit eine einzelne Heizeinheit ist, die mit verschiedenen Temperaturzonen von angewendetem Heizmedium, Dampf oder Kombinationen davon entlang ihrer Länge betrieben wird.

6. Verfahren nach Anspruch 5, wobei die einzelne Heizeinheit mit zunehmenden Temperaturen von einem Eingang zu einem Ausgang der einzelnen Heizeinheit betrieben wird.

7. Verfahren nach Anspruch 5, wobei die einzelne Heizeinheit mit einer inkrementellen Temperaturerhöhung betrieben wird.

8. Verfahren nach einem der Ansprüche 4 bis 7, wobei wenigstens eine von der ersten Heizeinheit, der zweiten Heizeinheit und der einzelnen Heizeinheit einen Wärmetauscher, vorzugsweise einen Schabewärmetauscher, umfasst.

9. Verfahren nach Anspruch 5, wobei eine Temperaturdifferenz des Fleischteigs zu einer Oberfläche der einzelnen Heizeinheit in allen Abständen von dem Eingang der einzelnen Heizeinheit zwischen etwa 7 °C und etwa 50 °C, vorzugsweise zwischen etwa 10 °C und etwa 30 °C, beträgt.

10. Verfahren nach einem der Ansprüche 5 bis 9,
wobei die einzelne Heizeinheit eine Temperaturzone von etwa 50 °C an dem Eingang der einzelnen Heizeinheit und eine Temperaturzone von etwa 170 °C an dem Ausgang der einzelnen Heizeinheit aufweist.

11. Verfahren nach Anspruch 10, wobei die einzelne Heizeinheit wenigstens drei Temperaturzonen umfasst.

12. Verfahren nach Anspruch 10, wobei die einzelne Heizeinheit wenigstens fünf Temperaturzonen von etwa 50 °C, etwa 80 °C, etwa 110 °C, etwa 140 °C bzw. etwa 170 °C von dem Eingang zu dem Ausgang der einzelnen Heizeinheit umfasst.

13. Verfahren nach einem der vorstehenden Ansprüche, wobei der Druck in der Heizeinheit höher ist als der Wasserdampfdruck bei der Schmelztemperatur des Proteins in dem Fleischteig, wobei der Druck in der Heizeinheit vorzugsweise von etwa 800 kPa bis etwa 2.000 kPa beträgt.

14. Verfahren nach einem der vorstehenden Ansprüche, wobei die Stücke durch eine Verdrängerpumpe wieder in das Verfahren eingeführt werden.

## Revendications

1. Procédé de production d'un analogue de viande, comprenant :
a) introduction d'une pâte à viande comprenant des protéines dans une unité de chauffage et chauffage de la pâte à viande jusqu'à une température supérieure à la température de fusion de la protéine pour produire un produit traité thermiquement,
b) transfert du produit traité thermiquement jusqu'à une unité de refroidissement et refroidissement du produit traité thermiquement jusqu'à une température en dessous de la température d'ébullition de l'eau à pression ambiante lorsqu'il sort de l'unité de refroidissement, et
c) division en morceaux du produit traité thermiquement refroidi,
dans lequel environ 1 % en poids à environ 30 % en poids des morceaux sont réintroduits dans le procédé.

2. Procédé selon la revendication 1, dans lequel environ 5 % en poids à environ 25 % en poids des morceaux sont réintroduits dans le procédé.

3. Procédé selon l'une quelconque des revendications précédentes, dans lequel la pâte à viande est chauffée jusqu'à une température d'au moins environ 130 °C, de préférence dans lequel la pâte à viande est chauffée jusqu'à une température d'environ 140 °C à environ 170 °C.

4. Procédé selon l'une quelconque des revendications précédentes, dans lequel l'unité de chauffage comprend :
une première unité de chauffage dans laquelle la pâte à viande est chauffée jusqu'à une température supérieure à la température de dénaturation de la protéine dans la pâte à viande, mais inférieure à la température de fusion de la protéine pour produire un premier produit traité thermiquement,
une seconde unité de chauffage dans laquelle le premier produit traité thermiquement est chauffé jusqu'à une température supérieure à la température de fusion de la protéine pour produire un second produit traité thermiquement, et un moyen de transfert disposé entre la première et la seconde unité de chauffage.

5. Procédé selon l'une quelconque des revendications 1 à 3, dans lequel l'unité de chauffage est une unité de chauffage unique exploitée avec différentes zones de température du milieu de chauffage appliqué, de la vapeur ou des combinaisons de ceux-ci sur sa longueur.

6. Procédé selon la revendication 5, dans lequel l'unité de chauffage unique est exploitée avec des températures croissantes depuis une entrée jusqu'à une sortie de l'unité de chauffage unique.

7. Procédé selon la revendication 5, dans lequel l'unité de chauffage unique est exploitée avec une augmentation de température incrémentale.

8. Procédé selon l'une quelconque des revendications 4 à 7, dans lequel au moins l'une parmi la première unité de chauffage, la deuxième unité de chauffage ou l'unité de chauffage unique comprend un échangeur de chaleur, de préférence un échangeur de chaleur à surface raclée.

9. Procédé selon la revendication 5, dans lequel une différence de températures entre la pâte à viande et une surface de l'unité de chauffage unique, à toutes les distances depuis l'entrée de l'unité de chauffage unique, est comprise entre environ 7 °C et environ 50 °C, de préférence entre environ 10 °C et environ 30 °C.

10. Procédé selon l'une quelconque des revendications 5 à 9,
dans lequel l'unité de chauffage unique a une zone de température d'environ 50 °C à l'entrée de l'unité de chauffage unique et une zone de température d'environ 170 °C à la sortie de l'unité de chauffage unique.

11. Procédé selon la revendication 10, dans lequel l'unité de chauffage unique comprend au moins trois zones de température.

12. Procédé selon la revendication 10, dans lequel l'unité de chauffage unique comprend au moins cinq zones de température d'environ 50 °C, environ 80 °C, environ 110 °C, environ 140 °C et environ 170 °C, respectivement, depuis l'entrée à la sortie de l'unité de chauffage unique.

13. Procédé selon l'une quelconque des revendications précédentes, dans lequel la pression dans l'unité de chauffage est supérieure à la pression de vapeur d'eau à la température de fusion de la protéine dans la pâte à viande, de préférence dans lequel la pression dans l'unité de chauffage est d'environ 800 kPa à environ 2 000 kPa.

14. Procédé selon l'une quelconque des revendications précédentes, dans lequel les morceaux sont réintroduits dans le procédé par une pompe volumétrique.
